(19)

Europäisches
Patentamt
European
Patent Office
Office européen
des brevets

(11) **EP 4 468 032 A1**

(12) **EUROPEAN PATENT APPLICATION**

(43) Date of publication:
**27.11.2024 Bulletin 2024/48**

(21) Application number: **23174819.5**

(22) Date of filing: **23.05.2023**

(51) International Patent Classification (IPC):
*G01S 13/89* (2006.01)    *G01S 13/931* (2020.01)
*G01S 7/35* (2006.01)    *G01S 7/41* (2006.01)
*G01S 13/42* (2006.01)    *G01S 13/72* (2006.01)
*G01S 13/86* (2006.01)

(52) Cooperative Patent Classification (CPC):
**G01S 13/931; G01S 7/354; G01S 7/41;**
**G01S 13/42; G01S 13/726; G01S 13/89;**
G01S 13/865; G01S 2013/9318; G01S 2013/93271

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Aptiv Technologies AG**
**8200 Schaffhausen (CH)**

(72) Inventors:
• **DLUGOSZ, Rafal**
  **62-030 Lubon (PL)**

• **BOGACKI, Piotr**
  **30-069 Kraków (PL)**
• **DLUGOSZ, Michal**
  **62-030 Lubon (PL)**
• **TSAL-TSALKO, Vladyslav**
  **30-638 Kraków (PL)**

(74) Representative: **Bardehle Pagenberg**
**Partnerschaft mbB**
**Patentanwälte Rechtsanwälte**
**Prinzregentenplatz 7**
**81675 München (DE)**

(54) **METHOD FOR ESTIMATING A ROAD LAYOUT IN A VEHICLE ASSISTANCE SYSTEM**

(57)    The present disclosure relates to a computer-implemented method for estimating a road layout according to a driving direction of a vehicle in a vehicle assistance system, the method comprising the steps of: receiving a sensor signal, wherein a first part of the sensor signal deviates from the road layout and wherein a second part of the sensor signal corresponds to the road layout indicated by a shape of a road guard rail; removing one or more irregularities from the first part of the sensor signal with respect to the driving direction of the vehicle to obtain a modified sensor signal; and obtaining the estimated road layout according to the modified sensor signal. In addition, the present disclosure relates to a corresponding computer program, an apparatus as well as a vehicle comprising the apparatus.

FIG. 1a

## Description

### Field of the invention

The present disclosure relates to a computer-implemented method for estimating a road layout in a vehicle assistance system, a corresponding computer program, a corresponding apparatus as well as a vehicle comprising the apparatus.

### Background

Vehicles (cars, ships, robots etc.) nowadays are typically provided with a vehicle assistance system (such as an Advanced Driving Assistance System (ADAS)) which provides some degree of driving assistance to the driver.

An important role in such ADASs is the estimation of a lane course which may serve as a basis for additional assistance functions such as lane departure warning systems, adaptive cruise control (ACC), Lateral Control (LC) or Autonomous Emergency Braking (AEB). The estimation of a lane course is often connected with the determination of the shape of road guard rails. This is because these guard rails often represent a good approximation reference for the lane course.

In order to approximate the shape of these road guard rails, polynomial regression is often used wherein the corresponding coefficients of the polynomial function are estimated based on data samples (e.g., RADAR, LIDAR or camera frames) of the environment of the vehicle.

However, the sheer amount of data samples collected by the sensors of a vehicle is immense. Additionally, these data samples often include anomalies such as distortions within the road guard rails caused by obstacles (e.g., other vehicles, trees etc.) or missing data samples (e.g., other access roads may temporally occlude a road guard rail leading to missing data samples).

Since ADAS functions operate in real time and often with limited computational resources due to the nature of embedded systems, efficient computation within the ADAS algorithms is fundamental. Nevertheless, these algorithms also have to be very accurate as they are used within safety critical systems.

Against this background, there is a need to provide a method for improving assistance systems by providing an efficient method for estimating a road layout.

### Summary of the invention

Aspects of the present disclosure are set out in the accompanying independent and dependent claims. Combinations of features from the dependent claims may be combined with features of the independent claims as appropriate and not merely as explicitly set out in the claims.

In an aspect, the present invention concerns a computer-implemented method for estimating a road layout according to a driving direction in a vehicle assistance system. The method may comprise the step of receiving a sensor signal, wherein a first part of the sensor signal deviates from the road layout and wherein a second part of the sensor signal corresponds to the road layout indicated by a shape of a road guard rail. The method may further comprise removing one or more irregularities from the first part of the sensor signal with respect to the driving direction of the vehicle to obtain a modified sensor signal. Further, the method may comprise obtaining the estimated road layout according to the modified sensor signal.

Removing irregularities within a sensor signal allows for more accurate estimation of a road layout. Additionally, as the driving direction is considered for the removing, the estimated road layout can better approximate the surrounding of the vehicle which is relevant for the navigation of the vehicle. In a non-limiting example, an irregularity may be a distortion of the sensor signal such that the sensor signal does not properly reflect the course of the guard rail. The distortion may be caused by an object, e.g., located between the vehicle and the guardrail. In this non-limiting example, removing the irregularity may refer to smoothing the sensor signal in a way that the distortion is at least partly removed. As a result, the modified sensor signal, which may be obtained this way, may include less irregularities than prior to the smoothing and may better reflect the course of the guardrail.

Optionally, the first part of the sensor signal may comprise a first plurality of data points and removing the one or more irregularities from the first part of the sensor signal may comprise reducing a deviation between at least one data point of the first plurality of data points and the road layout according to the driving direction.

Removing the irregularities on a per data point level increases the accuracy of the estimated road layout because no data point is left out which might be responsible for one or more of the irregularities. Accordingly, no irregularity is missed.

Optionally, reducing the deviation may comprise non-linearly filtering the first plurality of data points and obtaining a plurality of non-linearly filtered data points. Obtaining the estimated road layout according to the modified sensor signal may be based on the plurality of non-linearly filtered data points.

Optionally, the non-linearly filtering may comprise applying a non-linear low pass filter on the first plurality of data points. The non-linear filter may preferably be a median filter.

A non-linear filter when applied on the data points to reduce the deviations improves smoothing the signal. This is because - contrary to linear filter which merely blur deviations- non-linear filter are able to remove the deviation.

Optionally, the method may further comprise down sampling the plurality of non-linearly filtered data points and a plurality of data points of the second part of the sensor signal to obtain a second plurality of data points. The down sampling may be done using a down sampling factor of an integer value. Preferably the down sampling value may be 2.

Down sampling reduces the size in terms of data points of the sensor signal. Accordingly, processing of the sensor signal (e.g., to obtain the estimated road layout) becomes more efficient.

Optionally, the method may further comprise applying a linear high pass filter on at least the first plurality of data points to generate a plurality of linearly high filtered data points.

Applying a linear high pass filter can be done in parallel to for example applying the non-linear low pass filter. This way additional information about the road layout can be obtained while being time efficient due to the parallelism.

Optionally, the method may further comprise determining a localization of at least one object associated with the deviation between the at least one point of the first plurality of data points and the road layout based on the plurality of linearly high filtered data points.

The additional information about the road layout with respect to the localization of objects improves the overall approximation quality of the road layout.

Optionally, determining the localization of the at least one object may comprise determining the localization of the at least one object based on a frequency distribution within the plurality of linearly high filtered data points.

Localizing the objects based on the frequency distribution provides a computational resource efficient way of detecting the position of the object.

Optionally, the method may further comprise determining that an amount of data points of the second plurality of data points is larger than a threshold value. The method may further comprise down sampling the second plurality of data points to obtain a third plurality of data points.

Down sampling the data points to the threshold value allows to define a minimum amount of data points which are required for allowing the estimation of the road layout having a certain estimation quality. If a high estimation quality is desired, the threshold value is higher than if a low estimation quality is sufficient.

Optionally, the method may further comprise determining that a maximum number of filter iterations is not reached. The method may further comprise low pass filtering the second plurality of data points.

Defining an appropriate number of filter iterations can ensure that irregularities are sufficiently reduced.

Optionally, the method may further comprise determining one or more properties of the sensor signal. The method may further comprise increasing an amount of data points of at least the first plurality of data points using up sampling according to the one or more determined properties of the sensor signal.

Optionally, the one or more properties may be one or more of a distribution of data points within the sensor signal, an initial amount of data points within the sensor signal, a predefined amount of required data points within the sensor signal or any combination thereof.

Up sampling the sensor signal according to its properties can provide for a sufficient data basis so that irregularities can still be removed while avoiding that the sensor signal is thinned out to a point at which the road layout can no longer be estimated sufficiently well.

Optionally, the down sampling may be part of a discrete wavelet transformation, DWT, applied on the sensor signal. Up sampling may be part of an inverse DWT, IDWT.

Optionally, the sensor signal may be a 1D radar signal. The data points may be radar detections, wherein each radar detection may comprise a first coordinate indicating a lateral direction and a second coordinate indicating a longitudinal direction.

Optionally, the method may further comprise determining an operating instruction based on the estimated road layout affecting a function of the vehicle assistance system. The function may comprise at least one of triggering a steering command for the vehicle, conducting a vehicle path planning and triggering a warning for a driver of the vehicle.

In another aspect, the present invention concerns a computer program comprising instructions which when executed by a computer cause the computer to perform the method as described within the present disclosure.

In another aspect, the present invention concerns an apparatus comprising means for performing the method as described within the present disclosure.

In another aspect, the present invention concerns a vehicle comprising the afore mentioned apparatus.

As part of the present invention, it was found that usually when applying decomposition methods (e.g., filter algorithms such as DWT) on signals (e.g., sensor signals) the efficiency of the corresponding reconstruction phase (e.g., using IDWT) is crucial. However, for the use case of estimating a road layout base on the tracking and/or estimation of a shape of road guardrail(s), a reconstruction of the decomposed sensor signal(s) is not necessary.

As a result, it was found that a higher freedom of choice with respect to filter types is possible. While common decomposition-reconstruction techniques are limited to linear filters, the method according to the aspects of the present invention is no longer limited to linear filters. Accordingly, also non-linear filters can be used.

In addition, it was found that non-linear filters better fit to the nature of sensor data (e.g., radar date etc.). Sensor data is by its nature non-linear and non-stationary and thus difficult to describe mathematically. Therefore, applying linear filters on such sensor data is not applicable, because distortions (e.g., bulges or gaps) within the sensor data/signal can only be blurred. In contrast, non-linear filters can remove these distortions and are thus better suited.

## Brief description of the Drawings

Various aspects of the present invention are described in more detail in the following by reference to the accompanying figures without the present invention being limited to the embodiments of these figures.

Fig. 1a illustrates an example of a traffic scenario for applying a method for estimating a road layout in a vehicle assistance system according to aspects of the present disclosure.

Fig.1b illustrates an example of a traffic scenario for which a method for estimating a road layout in a vehicle assistance system was applied according to aspects of the present disclosure.

Fig. 2 illustrates an exemplary radar data frame including various distortions according to aspects of the present disclosure.

Fig. 3 illustrates exemplary notations for directions and angles according to aspects of the present disclosure.

Fig. 4 illustrates a schematic sequence of operations for estimating a road layout according to aspects of the present disclosure.

Fig. 5a illustrates a first part of test results of a method for estimating a road layout according to aspects of the present disclosure.

Fig. 5b illustrates a second part of test results of a method for estimating a road layout according to aspects of the present disclosure.

Fig. 5c illustrates a third part of test results of a method for estimating a road layout according to aspects of the present disclosure.

## Detailed description

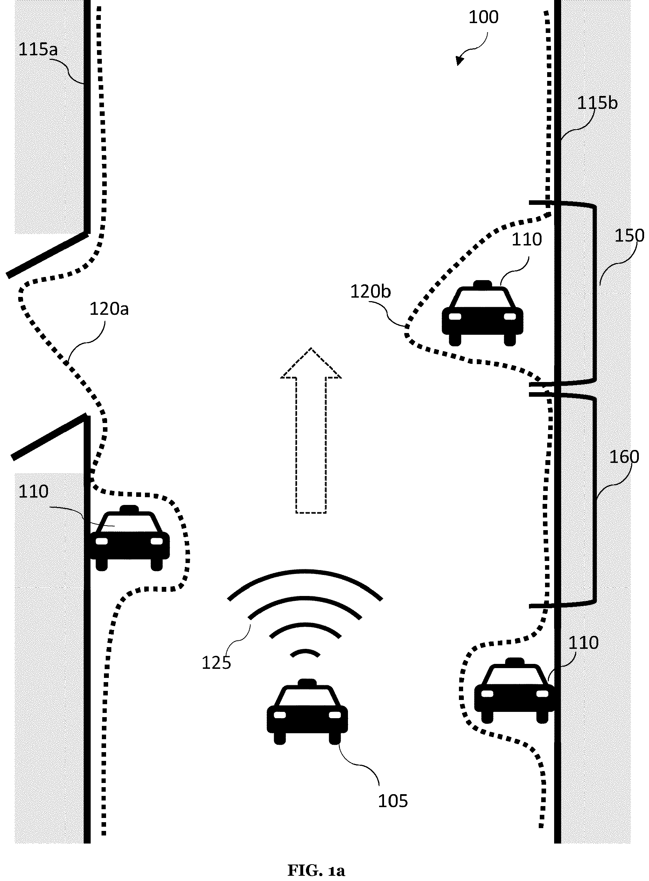

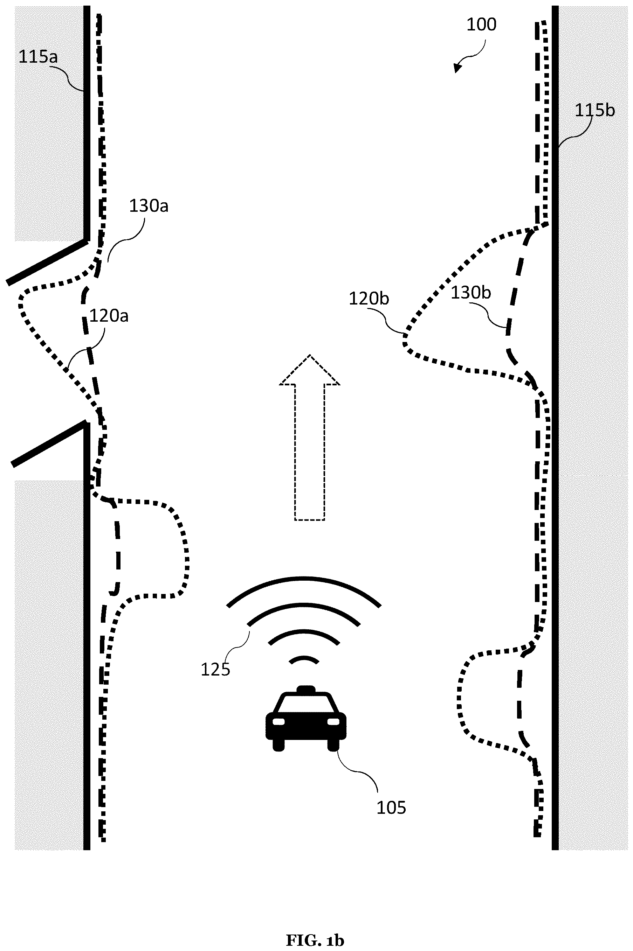

Fig. 1 a illustrates an example of a traffic scenario 100 for applying a method for estimating a road layout in a vehicle assistance system according to aspects of the present disclosure.

The illustrated traffic scenario 100 includes a vehicle 105 equipped with corresponding sensor(s) 125 which serve data for a corresponding vehicle assistance system of the vehicle 105 for estimating the road layout. The sensor(s) 125 may refer to radar, lidar, camera or any other type of sensor. As illustrated by the arrow, the vehicle 105 has an intended driving direction according to which the road layout may be estimated. The road on which the vehicle 125 is driving may be limited at the right side by a road guardrail 115b having a corresponding shape as illustrated by the black line on the right side of the road. The road on which the vehicle 125 is driving may be limited at the left side by a road guardrail 115a having a corresponding shape as illustrated by the black line on the left side of the road.

In addition, one or more obstacles or objections 110 (e.g., other vehicles) may be placed on the road (i.e., the object may either be static or dynamic). The vehicle 105 may receive a sensor signal 120a-b (e.g., using the sensor(s) 125). A first part of the sensor signal may deviate from the road layout. Section 150 illustrates a first part of the sensor signal where due to an obstacle such as a vehicle 110 in which the sensor signal deviates from the road layout. A second part of the sensor signal may correspond to the road layout indicated by a shape of a road guard rail 115a-b. The section 160 illustrates a second part of the sensor signal where the sensor signal corresponds to the road layout. The first part of the sensor signal may comprise a first plurality of data points as indicated by the dotted lines at the left side of the road and the right side of the road.

The sensor signal 120a-b may only include the data points of the left side, may only include the data points of the right side or the data points of both sides. The data points on the left side may be associated with the shape of the road guardrail 115a on the left side. The data points on the right side may be associated with the shape of the road guardrail 115b on the right side. In this context, associated may relate to the data points trying to approximate or track the shape of the road guardrail 150a-b based on which the road layout may be estimated. However, as may be seen by comparing the data points of the sensor signal 120a-b with the shape of the road guardrail 115a-b there may be distortions within the sensor signal 120a-b. A distortion may also be considered as an irregularity. The distortions may be caused by an objection 110. Where an object 110 is placed on the road, the object may cover the road guardrail 150a-b. As a result, the data points of the first plurality of data points may deviate from the actual shape of the road guardrail 150a-b at the specific position. Such a deviation in form of a bulge may be seen at the right side of the road, where two vehicles 110 are placed on the right side of the road. The vehicles 110 cover the road guardrail 150b resulting in certain data points of the first plurality of data points deviating from the actual shape of the road guardrail 115b. Such a deviation in form of a bulge may also be seen at the left side of the road, where a vehicle 110 is placed on the left side of the road. The vehicle 110 covers the road guardrail 150a resulting in certain data points of the first plurality of data points deviating from the actual shape of the road guardrail 115a. Such a deviation may also be caused by an access road as can be seen on the left side of the road. In this case, data points of the first plurality of data points lack an associated part of the road guardrail 115a.

In order to estimate the road layout of the vehicle 105 one or more irregularities from the first part of the sensor signal are removed with respect to the driving direction of the vehicle (as indicated by the arrow) to obtain a modified sensor signal (130a; 130b) according to which the estimated road layout is obtained.

Using the first plurality of data points, the deviation(s) between at least one data point of the first plurality of data points and the road layout of the vehicle 105 have to be reduced. Reducing may be done by non-linearly filtering the first plurality of data points. This way a plurality of non-linearly filtered data points may be received.

After reducing the one or more irregularities, the estimated road layout may be obtained according to the modified sensor signal (130a; 130b). The modified sensor signal may comprise the plurality of non-linearly filtered data points if non-linearly filtering of the first plurality of data points was applied.

The non-linearly filtering may comprise applying a non-linear low pass filter on the first plurality of data points. Preferably, the non-linear filter is a median filter. However, other non-linear filters may also be considered.

The plurality of non-linearly filtered data points and/or a plurality of data points of the second part of the sensor signal may additionally be down sampled to obtain a second plurality of data points. Down sampling may be done using a down sampling factor. For example, the down sampling factor may be two. In this case, the second plurality of data points may comprise half as many data points than the plurality of non-linearly filtered data points. It may be determined that an amount of data points of the second plurality is larger than a threshold value. The threshold value may indicate a number of data points. This number may dependent on a degree of a polynomial used for subsequent polynomial regression. Accordingly, the number of data points may be determined as

$$number\ of\ data\ points = degree\ of\ polynomial + 1$$

This means that if a degree of 3 is intended to be used for the polynomial regression, at least 4 data points are required within the second plurality of data points such that the polynomial regression can be accurately performed. On the other side, if more than 4 data points are still within the second plurality of data points, further down sampling can be performed.

In other words, if the amount of data points of the second plurality is larger than the threshold value, the second plurality of data points may be further down sampled using a down sampling factor (e.g., the same down sampling factor as used prior or a different down sampling factor) to obtain a third plurality of data points. The third plurality of data points may then be used to estimate the road layout.

Of course, it may also be possible to already check whether an amount of data points of the non-linearly filtered data points and/or the plurality of data points of the second part of the sensor signal is/are larger than the threshold value. If not, down sampling could be avoided. Alternatively, one or more properties of the sensor signal may be determined. If the one or more properties indicate that an increasing of data points in the first plurality of data points is required, up sampling may be applied at least on the first plurality of data points to increase the amount of data points within the first plurality of data points (i.e., up sampling may also be conducted on the plurality of data points of the second part of the sensor signal). A property of the sensor signal may be a distribution of the data points within the sensor signal (e.g., the data points of the first plurality of data points may not be equally distributed). A property of the sensor signal may be an initial amount of data points within the sensor signal (e.g., a sensor may have collected less data points than required and thus an increase of data points may be required). A property of the sensor signal may relate to a predefined amount of required data points (e.g.,, the first plurality of data points at least has to include the predefined amount of data points).

By down sampling, the number of data points according to which the road layout is estimated may be reduced. As a result, less computation resources are required meeting the requirement of real-time systems. Down sampling as referred to within this disclosure may be part of a discrete wavelet transformation (DWT), which is applied on the sensor signal. Up sampling as referred to within this disclosure may be part of an inverse DWT (IDWT), which is applied on the sensor signal. Applying the DWT and/or IDWT on the sensor signal also comprises the applying of the DWT and/or the IDWT on the first plurality of data points, the plurality of data points of the second part of the sensor signal as well as the second plurality of data points and every other plurality of data points which is obtained by further iterations.

After at least a first down sampling step (i.e., at least the second plurality of data points is obtained) further filtering may be possible. I.e., the second plurality of data points may be filtered to obtain a third plurality of data points. Whether or not further filtering is performed may be based on a number of performed filter iterations. A maximum number of filter iterations may be defined. If it is determined that the maximum number of filter iterations has not yet been reached, further filtering may be performed. The further filtering may again refer to applying a low pass filter. However, it may be possible that the further filtering is done by applying a linear filter or a non-linear filter. Selecting the type of filter (i.e., non-linear or linear) may dependent on a deviation between the second plurality of data points and the road layout.

Additionally to the non-linearly filtering, a linear high pass filter may be applied at least on the first plurality of data points. This way, a plurality of linearly high filtered data points may be generated based on which a localization of at least one object 110 associated with the deviation between the at least one point of the first plurality of data points and the road layout may be determined. The localization of the at least one object may be determined based on a frequency distribution within the plurality of linearly high filtered data points. In case further filtering iterations are performed as described above, it may be possible that within each additional iteration also a linear high pass filter is applied on the corresponding plurality of data points. This way more information for determining the localization of the at least one object may be gathered.

The sensor signal 120a-b may be a 1D radar signal. In this case, a data point of the various pluralities (i.e., first, second, third and so forth) of data points may relate to a radar detection. A radar detection may comprise a first coordinate indicating a lateral direction and a second coordinate indicating a longitudinal direction. Signals of other dimensionality (e.g., 2D, 3D etc.) or data type (e.g., images, lidar etc.) are also possible. It may be possible that the data points 120a-b are result of a pre-processing step in which only data points of the sensor signal which are actually associated with the road guardrails 150a-b are considered for further processing. Further pre-processing steps such as achieving a uniform distribution of the data points may also be performed beforehand.

Fig. 1 b illustrates an example of a traffic scenario for which a method for estimating a lane course in a vehicle assistance system was applied according to aspects of the present disclosure. As one can see, the traffic scenario 100 of Fig. 1b is the same as described with respect to Fig. 1a. The difference is that Fig. 1b further illustrates how the method according to aspects of the present disclosure is able to efficiently estimate the road layout of the vehicle 105. As explained with respect to Fig. 1b, the estimated lane course may be obtained according to a plurality of non-linearly filtered data points. The plurality of non-linearly filtered data points is illustrated by the dashed lines on the left and right side of the road. If one compares the first plurality of data points of the sensor signal as indicated by the dotted lines with the plurality of non-linearly filtered data points as indicated by the dashed lines, one can see that latter is more accurate when it comes to approximating the actual road layout of the vehicle 105 with respect to the intended driving direction of the vehicle 105 as indicated by the arrow. The intended driving direction of the vehicle may be provided by corresponding assistance systems (e.g., a navigation system). In particular, the deviation of certain data points in regions (e.g., 150) which were covered by the objects 110 in Fig. 1a is reduced.

In the example illustrated in Fig. 1b, down sampling of the plurality of non-linearly filtered data points was performed. Down sampling was already explained with respect to Fig. 1a. As a result, the dashed lines can also be interpreted as the second plurality of data points which is obtained by down sampling at least the plurality of non-linearly filtered data points. As one can see based on the density of dashes or dots respectively, the second plurality of data points comprises less data points than the first plurality of data points.

Of course, it may be possible that further filtering and/or down sampling iterations are performed. However, these cases are not illustrated.

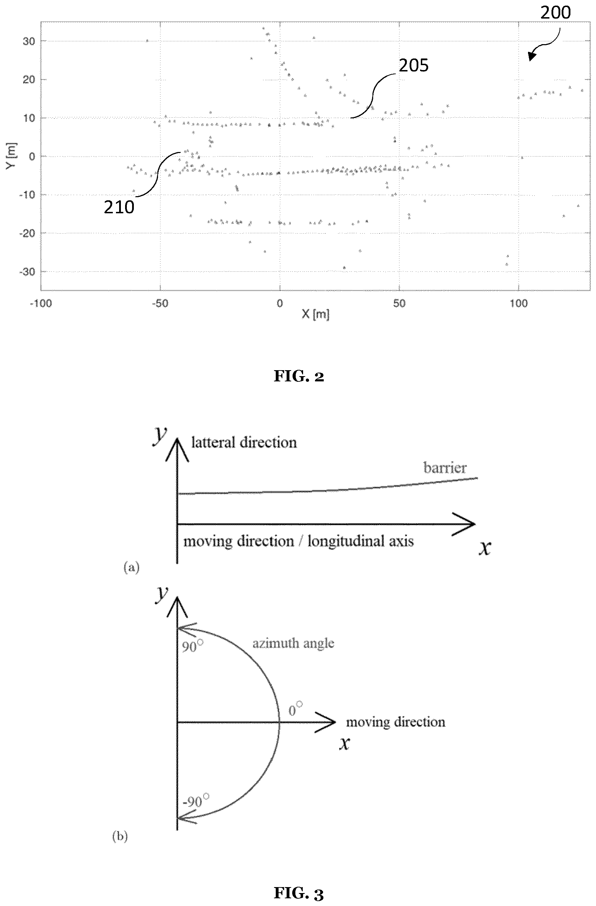

Fig. 2 illustrates an exemplary radar data frame including various distortions according to aspects of the present disclosure. In this example, the sensor signal may be a 1D radar signal. The 1D radar signal may comprise a plurality of radar data frames, wherein each radar data frame represents the covered environment of the vehicle 105 at a certain point in time. The covered environment may be the same as described with respect to the traffic scenario 100 in Figs. 1a and 1b.

The exemplary radar data frame comprises a plurality of data points referred to radar detections. As indicated in Fig. 2 these data points can be displayed in a coordinate system with a X axis indicating longitudinal values in meters [m] and a Y axis indicating lateral values in meters [m]. Accordingly, each data point may comprise a first coordinate indicating a lateral direction (i.e., the corresponding value on the Y-axis) and a second coordinate indicating a longitudinal direction (i.e., the corresponding value on the X-axis). The lateral direction may refer to a moving direction on a planar plane or space on which the vehicle moves. The longitudinal direction may refer to a location of the corresponding detection.

As shown the radar data frame includes various distortions as indicated by reference signs 205 and 210. For example, the distortion 205 may be caused by an access road as explained with respect to Fig. 1a. The distortion 210 may be caused by an object (e.g., a vehicle 110) as also further explained with respect to Fig. 1a. Furthermore, as one can see, the plurality of data points is not evenly distributed along the X-axis. Accordingly, as mentioned with respect to Fig. 1, the unevenly sampled sensor signal comprising the data points may be pre-processed to solve this distribution issue.

Reasons for this unequally distribution are explained with respect to Fig. 3.

Fig. 3 illustrates exemplary notations for directions and angles according to aspects of the present disclosure. In section a of Fig. 3, a barrier such as for example a road guard rail is depicted in a coordinate system. The coordinate system may be the same as explained with respect to Fig. 2. I.e., the X-axis represents longitudinal values and the Y-axis represents longitudinal values.

Section b of Fig. 3 illustrates a range of azimuth angle values from -90° to 90°. As mentioned with respect to Fig. 2, a density of data points may depend on a corresponding azimuth angle. Assuming that the vehicle measuring/detecting the data points is at the origin of the coordinate system. Then for large azimuth angles (e.g., + / - 90°), the density of data points may be high, wherein for small azimuth angles (e.g., + / - 10°) the density of data points may be low. A large azimuth angle occurs if the detection is aside near the vehicle. A small azimuth angle indicates that the detection is more distant from the vehicle.

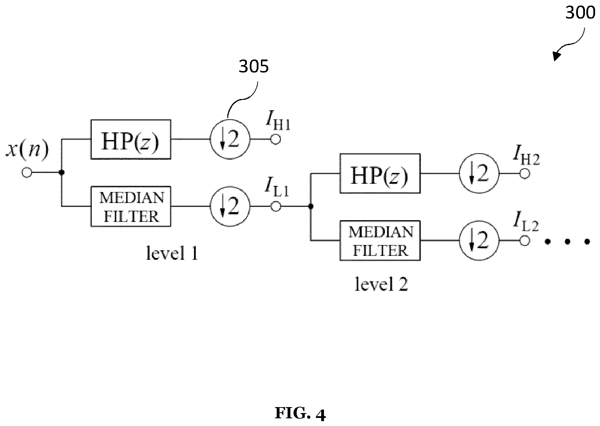

Fig. 4 illustrates a schematic sequence of operations for estimating a road layout according to aspects of the present disclosure. The sequence may relate to a plurality of iterations of filtering and/or down sampling being performed.

As one can see, the sensor signal comprising data points (e.g., the first plurality of data points of the first part of the sensor signal and the plurality of data points of the second part of the sensor signal) illustrated as $x(n)$ is received as input. In a first iteration (also referred to as level or decomposition level), at least the first plurality of data points may be non-linearly filtered using a median filter to generate a plurality of non-linearly filtered data points. This way, a deviation between at least one data point of the first plurality of data points and the road layout may be reduced. Additionally, or alternatively, a linear high pass filter (indicated as $HP(z)$) may be applied on at least the first plurality of data points to generate a plurality of linearly high filtered data points (indicated as $I_{H1}$) which may be used to determine a localization of at least one object associated with the deviation. Whether or not a down sampling 305 is applied on the plurality of linearly high filtered data point is optional and may dependent on the amount of points within the plurality of linearly high filtered data points and thus the required computational resources for processing the plurality of linearly high filtered data points when for example determining the localization of at least one object.

In the shown example, the plurality of non-linearly filtered data points may be down sampled 305 using a down sampling factor of 2. Accordingly, the obtained second plurality of data points (indicated as $I_{L1}$) may include half of the data points. The second plurality of data points may then in a second iteration again be filtered (e.g., either linearly or non-linearly). In this example, the second plurality of data points may be again non-linearly filtered using a median filter and afterwards down sampled. Additionally or alternatively, a linear high pass filter may again be applied on the second plurality of data points. This procedure may be repeated for further iterations until one or more of the stoppage criteria (e.g., number of filter iterations and/or amount of data points being larger than a threshold value) are fulfilled as explained with respect to Fig. 1.

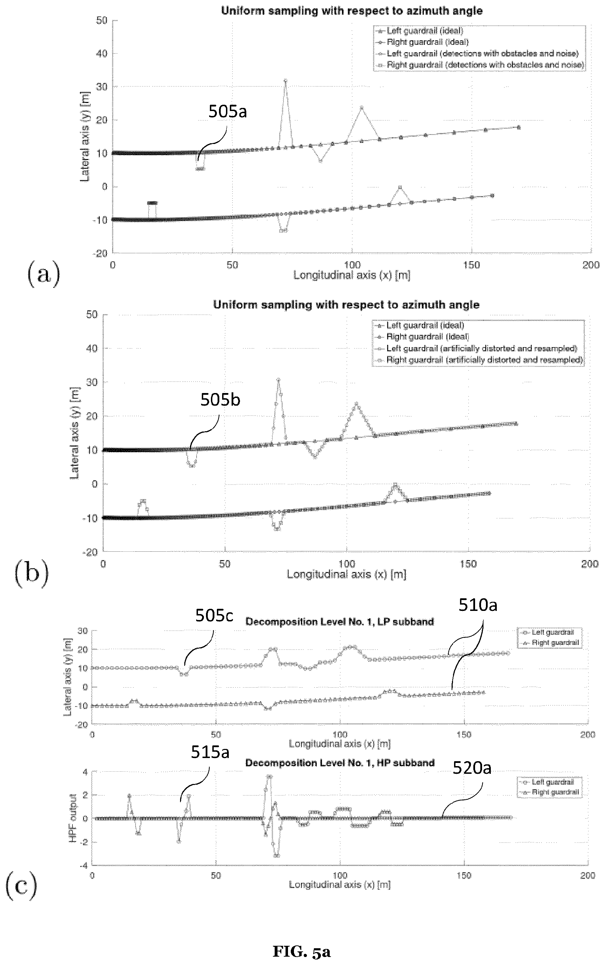

Figs. 5a illustrates a first part of test results of a method for estimating a road layout according to aspects of the present disclosure. In the example shown, a sensor signal is processed using the method according to aspects of the present invention.

In section(a) of Fig. 5a, one can see the corresponding sensor signal comprising a plurality of data points. For the left guard rail, these data points are indicated as dots and for the right guard rail these data points are indicated as squares. In addition, reference points of the actual road guardrails (i.e., the ideal shape) are indicated. For the left guardrail, by corresponding triangles and for the right guardrail by dots. The shown coordinate systems with a lateral axis (Y-axis) in [m] and a longitudinal axis (X-axis) in [m] may be the same as described with respect to Figs. 2 and 3. As one can see, the data points (in this example radar detections) comprise several distortions caused by obstacles as well as additional noise (e.g., caused by sensor inaccuracies). An example of a distortions is indicated by reference sign 505a. The indicated distortion may refer to a bulge caused by another vehicle. As one can see at the indicated region of the distortion, positions (i.e., coordinates) of the data points (i.e., the radar detections) differ from the positions of the corresponding reference points of the actual road guardrail. In addition, one can also notice that the data points of the sensor signal are unequally distributed. For this reason, a first step may be to achieve an equally distribution using corresponding pre-processing steps (e.g., up sampling with respect to the azimuth angles) as described above. The result of the pre-processing can be seen in section (b) of Fig. 5a. The pre-processed sensor signal may then be used as an input for the method for estimating the road layout according to aspects of the present disclosure.

Section (c) illustrates a result from a first iteration including non-linearly low pass filtering of the first plurality of data points and the plurality of data points of the second part of the sensor signal, applying a linear high-pass filter on the first plurality of data points and the plurality of data points of the second part of the sensor signal as well as a down sampling of the non-linearly low pass filtered data points 510a. The high-pass linear filtered data points are indicated by reference sign 520. These steps of the first iteration may be done as described with respect to Fig. 4.

As one can see, the deviation of the data points at the first distortion 505c has been reduced compared to the original distortion 505a-b. In addition, one can see at the bottom part of the Figure where the high-pass linear filtered data points 520a are indicated, that at region 515a a frequency distribution (e.g., a peak preferably above a defined frequency threshold) within the points 520a can be used to determine a localization of the object which is responsible for the distortion 505a-c.

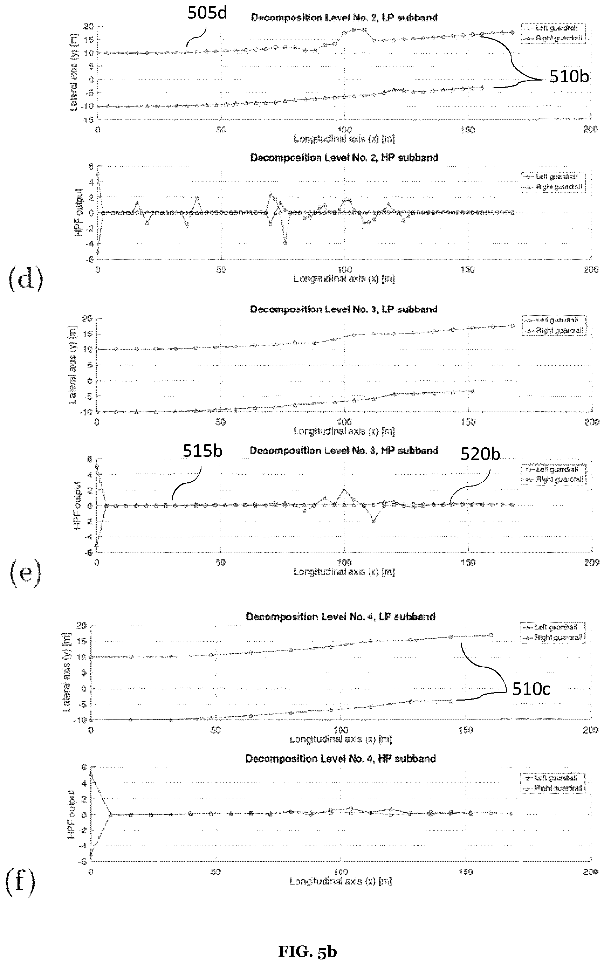

Figs. 5b illustrates a second part of test results of a method for estimating a road layout according to aspects of the present disclosure. In the shown second part, further iterations of the method, namely iterations 2-4, are indicated in the corresponding sections (d)-(f) of Fig. 5b. As one can see, the distortion 505d has now been fully removed, i.e., the corresponding deviation as been reduced.

Accordingly, one can notice that the data points 510b now are closer to the actual shape of the road guard rails. This estimation may further improve with additional iterations as indicated in sections (e) and (f). Additionally, the amount of data points may decrease due to down sampling with a corresponding down sampling factor. One can also notice that during later iterations, the high-pass linear filtered data points 520b solely lose their information value with respect to the localization of objects. As one can see for example in region 515b, the data can no longer indicate a respective localization well when compared to previous iterations (e.g., region 515a in the first iteration of section (c) of Fig. 5a). As a result, applying a high-pass filter may only be done within the earlier iterations (e.g., in the first iteration and/or the following iterations).

One can also notice that initial distortions (e.g., distortion 505a-c) are becoming more and more smooth due to the reduced deviation. Accordingly, it may be possible that for later iterations (e.g., iteration 2 and/or the following iterations) a linear filter may be applied instead of a non-linear filter.

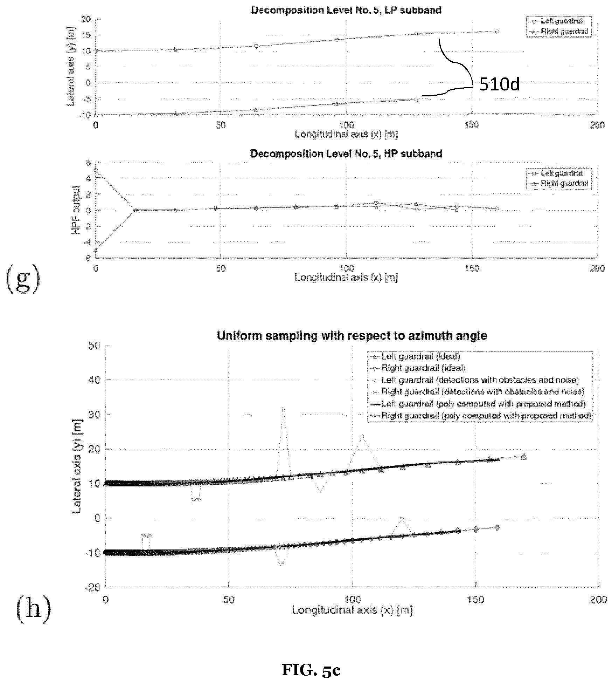

Figs. 5c illustrates a third part of test results of a method for estimating a road layout according to aspects of the present disclosure. In the shown third part, a further iteration of the method, namely iteration 5, is indicated in section (g) of Fig. 5c. Additionally, in section (h), a polynomial, which has been estimated/calculated based on the data points 510d resulting from the last conducted iteration of the method, is indicated which accurately estimates the shape of the ideal guard rails and thus the road layout.

Embodiments of the present disclosure may be realized in any of various forms. For example, in some embodiments, the present invention may be realized as a computer-implemented method, a computer-readable memory medium, or a computer system.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

The driver assistance system may be provided in a vehicle, such as automobiles, robots, motorbikes, trucks, etc.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. In particular, with reference to the appended claims, features from dependent claims may be combined with those of the independent claims and features from respective independent claims may be combined in any appropriate manner and not merely in the specific combinations enumerated in the appended claims.

## Claims

1. Computer-implemented method for estimating a road layout according to a driving direction of a vehicle in a vehicle (105) assistance system, the method comprising the steps of:

   receiving a sensor signal (120a, 120b), wherein a first part of the sensor signal deviates from the road layout and wherein a second part of the sensor signal corresponds to the road layout indicated by a shape of a road guard rail;
   removing one or more irregularities from the first part of the sensor signal with respect to the driving direction of the vehicle to obtain a modified sensor signal (130a; 130b); and
   obtaining the estimated road layout according to the modified sensor signal (130a; 130b).

2. The method of the preceding claim, wherein the first part of the sensor signal comprises a first plurality of data points, and wherein removing one or more irregularities from the first part of the sensor signal comprises:
reducing a deviation between at least one data point of the first plurality of data points and the road layout according to the driving direction.

3. The method of the preceding claim, wherein reducing the deviation comprises:

   non-linearly filtering the first plurality of data points;
   obtaining a plurality of non-linearly filtered data points; and
   wherein obtaining the estimated road layout according to the modified sensor signal is based on the plurality of non-linearly filtered data points.

4. The method of claim 3, wherein non-linearly filtering comprises:
applying a non-linear low pass filter, preferably a median filter, on the first plurality of data points.

5. The method of claims 3 to 4, wherein the method further comprises:

   down sampling the plurality of non-linearly filtered data points and a plurality of data points of the second part of sensor signal to obtain a second plurality of data points;
   wherein the down sampling is preferably done using a down sampling factor of 2.

6. The method of claims 2 to 5, wherein the method further comprises:
applying a linear high pass filter on at least the first plurality of data points to generate a plurality of linearly high filtered data points.

7. The method of claim 6, wherein the method further comprises:
determining a localization of at least one object (110) associated with the deviation between the at least one point of the first plurality of data points and the road layout based on the plurality of linearly high filtered data points.

8. The method of claim 7, wherein determining the localization of the at least one object (110) comprises:
determining the localization of the at least one object (110) based on a frequency distribution within the plurality of linearly high filtered data points.

9. The method of claims 5-8, wherein the method further comprises:

   determining that an amount of data points of the second plurality of data points is larger than a threshold value; and
   down sampling the second plurality of data points to obtain a third plurality of data points.

10. The method of claims 5-9, wherein the method further comprises:

   determining that a maximum number of filter iterations is not reached; and
   low pass filtering the second plurality of data points.

11. The method of claims 2 to 10, wherein the method further comprises:

   determining one or more properties of the sensor signal;
   wherein the one or more properties are one or more of a distribution of data points within the sensor signal; an initial amount of data points within the sensor signal; a predefined amount of required data points within the sensor signal; and
   increasing an amount of data points of at least the first plurality of data points using up sampling according to the one or more determined properties of the sensor signal.

12. The method of any one of the preceding claims, wherein the method further comprises:
determining an operating instruction based on the estimated road layout affecting a function of the vehicle assistance system, wherein the function preferably comprises at least one of:

   - triggering a steering command for the vehicle;
   - conducting a vehicle path planning;

- triggering a warning for a driver of the vehicle.

13. A computer program comprising instructions, which when executed by a computer, cause the computer to perform the method of any one of the claims 1 to 12.

14. An apparatus comprising means for performing the method of any one of the claims 1 to 12.

15. A vehicle comprising the apparatus of claim 14.

**FIG. 1a**

**FIG. 1b**

**FIG. 2**

**FIG. 3**

300

305

$x(n)$

HP($z$) ⬇2 $I_{H1}$

MEDIAN FILTER ⬇2 $I_{L1}$

level 1

HP($z$) ⬇2 $I_{H2}$

MEDIAN FILTER ⬇2 $I_{L2}$

level 2

**FIG. 4**

FIG. 5a

FIG. 5b

FIG. 5c

# EP 4 468 032 A1

**Europäisches Patentamt**
**European Patent Office**
**Office européen des brevets**

## EUROPEAN SEARCH REPORT

**Application Number**

EP 23 17 4819

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 395 192 B1 (SILVER DAVID HARRISON [US] ET AL) 19 July 2016 (2016-07-19) * column 1, lines 24-25 * * column 4, lines 22-34 * * column 7, lines 19-26; figure 1 * * column 10, line 25 - column 24, line 19; figures 3-5 * | 1-11, 13-15 | INV. G01S13/89 G01S13/931 G01S7/35 G01S7/41 G01S13/42 G01S13/72 |
| X | EP 3 798 665 A1 (ZENUITY AB [SE]) 31 March 2021 (2021-03-31) * paragraphs [0008], [0048] - [0058], [0071] - [0077]; figures 1,4 * | 1-15 | ADD. G01S13/86 |
| X | US 2015/293216 A1 (O'DEA KEVIN A [US] ET AL) 15 October 2015 (2015-10-15) * paragraphs [0025] - [0027], [0034], [0038] - [0040], [0048]; figures 1, 5 * | 1-15 | |
| X | CN 112 829 753 A (UISEE SHANGHAI AUTOMOTIVE TECH CO LTD) 25 May 2021 (2021-05-25) * paragraphs [0034], [0092], [0093] * | 1-15 | |
| X | KR 101 655 682 B1 (HYUNDAI MOTOR CO LTD [KR]) 7 September 2016 (2016-09-07) * paragraphs [0007], [0020], [0032], [0051]; figure 7 * | 1-15 | |
| X | JP 2012 164021 A (TOYOTA MOTOR CORP) 30 August 2012 (2012-08-30) * paragraphs [0002], [0003], [0006], [0007], [0047] - [0057]; figures 7-11 * | 1,2, 13-15 | |
| X | US 2013/218448 A1 (SUZUKI KOJI [JP]) 22 August 2013 (2013-08-22) * paragraphs [0020], [0048], [0058], [0059]; figures 1,2,5,9 * | 1,2, 13-15 | |

**TECHNICAL FIELDS SEARCHED (IPC)**

G01S

The present search report has been drawn up for all claims

| Place of search | Date of completion of the search | Examiner |
|---|---|---|
| Munich | 24 October 2023 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

18

**EP 4 468 032 A1**

## ANNEX TO THE EUROPEAN SEARCH REPORT
## ON EUROPEAN PATENT APPLICATION NO.

**EP 23 17 4819**

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2023

| Patent document cited in search report | | Publication date | Patent family member(s) | | Publication date |
|---|---|---|---|---|---|
| US 9395192 | B1 | 19-07-2016 | NONE | | |
| EP 3798665 | A1 | 31-03-2021 | NONE | | |
| US 2015293216 | A1 | 15-10-2015 | CN 105000019 A | | 28-10-2015 |
| | | | DE 102015105206 A1 | | 12-11-2015 |
| | | | US 2015293216 A1 | | 15-10-2015 |
| CN 112829753 | A | 25-05-2021 | NONE | | |
| KR 101655682 | B1 | 07-09-2016 | NONE | | |
| JP 2012164021 | A | 30-08-2012 | JP 5522543 B2 | | 18-06-2014 |
| | | | JP 2012164021 A | | 30-08-2012 |
| US 2013218448 | A1 | 22-08-2013 | CN 103348393 A | | 09-10-2013 |
| | | | DE 112010005977 T5 | | 29-08-2013 |
| | | | JP 5569591 B2 | | 13-08-2014 |
| | | | JP WO2012059955 A1 | | 12-05-2014 |
| | | | US 2013218448 A1 | | 22-08-2013 |
| | | | WO 2012059955 A1 | | 10-05-2012 |

EPO FORM P0459

For more details about this annex : see Official Journal of the European Patent Office, No. 12/82